# EUROPÄISCHE PATENTSCHRIFT

(11) **EP 2 597 170 B1**
(45) Veröffentlichungstag und Bekanntmachung des Hinweises auf die Patenterteilung: **06.01.2021**
(21) Anmeldenummer: 12192730.5
(22) Anmeldetag: 15.11.2012
(51) Int. Cl.: C23C 4/02, C23C 4/12, C23C 4/131, C23C 4/134, C23C 4/18, B23P 6/02

(54) **Reparaturverfahren einer Zylinderlauffläche mittels Plasmaspritzverfahren**
Process for repairing a cylinder running surface by means of plasma spraying processes
Procédé de réparation d'une surface de roulement d'un cylindre au moyen d'un procédé d'injection par plasma

(30) Priorität: 22.11.2011 DE 102011086803
(43) Veröffentlichungstag der Anmeldung: 29.05.2013
(73) Patentinhaber: Ford Global Technologies, LLC, Dearborn, MI 48126 (US)
(72) Erfinder: Silk, Mark, 50259 Pulheim (DE); Schramm, Leander, 07407 Remda-Teichel (DE); Verpoort, Clemens Maria, 40789 Monheim (DE); Pütz, Wolfgang, 51065 Köln (DE)
(74) Vertreter: Dörfler, Thomas

(56) Entgegenhaltungen:
- EP-A1- 1 408 134
- EP-A1- 1 416 063
- EP-A1- 1 559 807
- DE-A1-102005 055 984
- DE-A1-102006 057 641

## Beschreibung

Die vorliegende Erfindung betrifft ein Reparaturverfahren zum Herstellen einer Reparaturbeschichtung durch Plasmaspritzen, bei welchem eine Zylinderbuchse, insbesondere eine Zylinderbuchse eines Motorblocks, der z.B. aus einem Leichtmetall hergestellt ist, eine metallische Auskleidung aufweist.

Aus der EP 1 967 601 A2 ist bekannt, dass z.B. ein Aluminium-Motorblock, insbesondere dessen Zylinderlaufbahn mit einer Eisenlegierung unter Durchführung des Lichtbogendrahtspritzens zu beschichten. Dabei schlägt die EP 1 967 601 A2 vor, eine Eisenlegierung zu verwenden, welche unter anderem 5 bis 25 Gew.% Chrom enthält. Wesentlich ist bei der EP 1 967 601 A2, dass der Eisenschmelze zudem noch ein Zusatzpulver, und zwar Borcabid zugeführt wird. Bei dem Lichtbogendrahtspritzverfahren der EP 1 967 601 A2 handelt es sich um das so genannte TWAS-Verfahren, bei welchem zwei Drähte einem Spritzkopf derart zugeführt werden, dass an die Stromübertragung an die Drähte erfolgt. Berühren sich die beiden Drähte, wird durch einen permanenten Kurzschluss ein Lichtbogen gebildet, der die Drähte schmelzen lässt. Hinter der Düse befinde sich eine Düse, aus der Druckluft oder ein inertes Gas wie Stickstoff austritt. Dieser Gasstrom zerstäubt die geschmolzene Eisenlegierung und führt sie mit dem aufgeschmolzenen Borcabidpulver der zu beschichtenden Oberfläche zu.

Die DE 44 11 296 A1 und DE 44 47 514 A1 beschäftigen sich mit Beschichtungen mittels des Plasmaspritzens, wobei allerdings ein Metallpulver oder ein Fülldraht aufgeschmolzen werden, und wobei dem Werkstoffgemisch Stickstoff mittels metallischer Stickstoffverbindungen zugeführt wird, um die Beschichtung aufzuhärten.

Heutige Verbrennungsmotoren bzw. deren Motorblöcke können aus einem Metall oder Leichtmetall, wie z.B. Aluminium gegossen sein, wobei insbesondere Aluminiumblöcke an ihren Zylinderbohrungen eine Eisen- bzw. Metallschicht aufweisen. Die Metallschicht kann thermisch aufgespritzt sein. Als thermische Spritzverfahren sind die oben genannten Verfahren bekannt. Eine Beschichtung der Zylinderbohrungen mittels dem Plasmaspritzverfahren ist dahin vorteilhaft, weil so eine Beschichtung hergestellt werden kann, welche sich positiv auf einen reduzierten Verschleißfaktor, auf eine verlängerte Lebensdauer des Motors bei geringerem Ölverbrauch im Vergleich zu konventionellen Auskleidungen mittels Eisenlegierungen im Graugussverfahren auswirkt.

Gleichwohl weisen heutige Motorblöcke, welche z.B. aus einem Leichtmetall hergestellt sind, noch Auskleidungen aus gegossenen Eisenmetalllegierungen wie zum Beispiel aus einem Grauguss auf, so dass z.B. erheblicher Verschleiß, beispielsweise im oberen Totpunktbereich aber auch in anderen Bereichen der Zylinderbuchse auftritt. Tritt ein solcher Verschleiß auf, könnte versucht werden, Reparaturmaßnahmen vorzusehen, oder den beschädigten Zylinderblock zu ersetzen, was nicht nur sehr kostenintensiv ist, sondern sich auch nachteilig auf den gesamten Antriebsstrang auswirken kann, da Austauschkomponenten möglicher Weise nicht sofort mit den bestehenden harmonieren und unter Umständen langwierige Einstellarbeiten erforderlich sind. In der DE 10 2008 019 933 A1 wird darauf hingewiesen, dass eine Reparatur mittels thermischen Spritzens schwierig wegen der die Zylinderlaufbuchse übergreifenden Aluminiumlippe und des Zwischenbereiches von der Aluminiumlippe zu dem zu beschichtenden Oberflächenbereich an der Zylinderlaufbuchse. Die DE 10 2008 019 933 A1 offenbart weiter, dass nur der verschlissene Bereich der Zylinderlauffläche mit der Hammer- oder Schlagbürste bearbeitet wird, wobei die benachbarten Bereiche nicht beschädigt bzw. bearbeitet würden und im beispielhaft gehonten Zustand verblieben. So werden in der Zylinderlaufbuchse Bereiche mit unterschiedlichen Materialien erzeugt, welche ein einheitliches Bearbeiten erschweren. Beispielsweise der Fachvortrag "Thermal spray applications in powertrain contribute to the saving of Energy and material resources" (gehalten von G. Barbezat am Third International Meeting on Thremal Spraying (3RIPT), 6-7. Dezember 2007, Lille, Frankreich) beschreibt eine solche Zylinderlauffläche, welche eine Teilbeschichtung nur im oberen Totpunktbereich aufweist, wobei ein Hybrid-Honverfahren mit einem speziellen Honwerkzeug zur Bearbeitung der unterschiedlichen Materialien erforderlich ist.

In der DE 10 2006 057 641 A1 ist ein Reparaturverfahren für die Formoberflächen von Formwerkzeugen mittels thermischen Spritzens offenbart. Dabei wird auf die Reparaturstelle ein Spritzwerkstoff mit Übermaß aufgebracht und dann durch Nachbearbeitung auf eine gewünschte Endkontur gebracht. Allerdings ist dieses Verfahren nicht geeignet für Zylinderlaufbahnen im Totpunktbereich des Kolbens.

Aus der EP 1 559 807 A1 ist ein Reparaturverfahren für die Zylinderlaufbahnen von Verbrennungsmotoren bekannt, wobei die verschlissene Gleitschicht teilweise abgetragen wird und dann mittels thermischen Spritzens eine neue Gleitschicht aufgetragen wird. Es ergibt sich jedoch immer noch die Aufgabe, im Totpunktbereich des Kolbens eine verbesserte neue Gleitschicht herzustellen.

Der Erfindung liegt die Aufgabe zugrunde, ein verbessertes Reparaturverfahren zum Reparieren von metallischen Auskleidungen in Leichtmetall-Zylinderbuchsen bereitzustellen.

Erfindungsgemäß wird die Aufgabe mit einem Verfahren mit den Merkmalen des Anspruchs 1 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen.

Die Erfinder/in haben/hat erkannt, dass zwischen der meist aus einem Grauguss bestehenden, gegossenen Auskleidung und dem Leichtmetall der Zylinderbuchse ein, wenn auch geringes, Ölvolumen in einem Spalt zwischen beiden Komponenten gefangen ist, so dass eine Reparatur mit einem herkömmlichen Vorgehen mittels dem Plasmaspritzverfahren, auch mittels dem PTWA-Innenbeschichtungsverfahren (Plasma Transfer Wire Arc) nicht möglich ist, da das gefangene Öl aufgrund der Einwirkung der Plasmaflamme aus dem Spalt austreten wird, so dass erforderliche Verbindungseigenschaften der aufgespritzten Beschichtung zum Grundwerkstoff nicht mehr gewährleistet sind, wobei auch die Beschichtung an dem Übergang zwischen dem Leichtmetall und der metallischen Auskleidung genau an diesem Materialübergang versagen würde.

Gemäß der Erfindung wird daher ein Reparaturverfahren zum Herstellen einer Reparaturbeschichtung durch Plasmaspritzen, wie zum Beispiel dem PTWA-Innenbeschichtungsverfahren, bei welchem eine Zylinderbuchse, insbesondere eine Zylinderbuchse eines Motorblocks, der aus Leichtmetall wie z.B. Aluminium hergestellt bzw. gegossen ist, und eine bevorzugt aus Grauguss bestehende metallische Auskleidung aufweist, vorgeschlagen, bei welchem zumindest ein beschädigter Bereich der Auskleidung so bearbeitet wird, dass die Materialdicke der Auskleidung reduziert wird, wobei so dann der bearbeitete Bereich aktiviert wird und erst dann der gesamte Innenbereich der Zylinderbuchse mittels thermischen Spritzen beschichtet wird, wobei die aufgebrachte Reparaturspritzschicht anschließend vollständig von dem Leichtmetall und dem nicht aktivierten Bereich entfernt wird, und die auf der Auskleidung verbleibende Spritzbeschichtung feinbearbeitet wird, so dass der ursprüngliche Innendurchmesser hergestellt ist. Dabei wird die Auskleidung im beschädigten Bereich auch etwas unterhalb und oberhalb desselben in ihrer Materialdicke abgetragen, wobei zielführend ist, wenn die Auskleidung oberhalb des oberen Totpunktbereiches in ihrer Materialdicke verbleibt, also nicht reduziert wird. Hier verändert sich der ursprüngliche Innendurchmesser der Leichtmetalllippe und der Zylinderlaufbuchse vorteilhaft nicht. Insbesondere kann noch vorgesehen werden, die Materialreduzierung, also die Wandstärkenreduzierung von einem Übergang zwischen dem oberen Totpunktbereich und einem Kopfbereich in Richtung zum unteren Fußpunkt der Zylinderlaufbuchse fortzuführen. Günstig ist weiter, wenn der Übergang des abgetragenen Bereiches der Auskleidung zu dem nicht bearbeiteten Bereich stetig, also quasi einer schiefen Ebenen folgend ausgeführt ist.

Nachdem die Auskleidung in ihrer Materialdicke in dem betreffenden, beschädigten Bereich, bzw. von diesem, bevorzugt von dem oberen Totpunktbereich bis zum Fußpunkt der Zylinderlaufbuchse reduziert, also abgetragen ist, wird dieser Bereich aktiviert, was bevorzugt mittels dem kombinierten Hammerbürstverfahren beispielsweise gemäß der DE 10 2008 019 933 A1 erreicht wird, wobei eine Hammer- oder Schlagbürste eingesetzt werden kann. Dabei entstehen umlaufende Nuten in der materialreduzierten Auskleidung, welche Nuten noch Hinterschneidungen aufweisen können

Erst wenn der betreffende Bereich aktiviert ist, wird die Reparaturschicht aufgespritzt. Dabei wird die Reparaturschicht zumindest im aktivierten Bereich mit einem Übermaß aufgetragen, wobei die Reparaturschicht auf den aktivierten Bereich über den Totpunktbereich hinaus den Ölspalt überbrückend bis zur die Zylinderlaufbuchse übergreifenden Leichtmetalllippe aufgebracht wird. Ein Beschichten über den oberen Totpunktbereich hinaus ist nicht weiter schädlich, da diese Beschichtung anschließend im abschließenden Feinbearbeitungsschritt abgetragen wird. Obwohl so zwar Materialverluste zu erwarten sind, welche vermeidbar wären, ist ein solches Vorgehen hinsichtlich der Bearbeitungsökonomie vorteilhaft, da das Spritzwerkzeug in einem durchgehenden Arbeitsgang ohne Beachtung von Übergangsstellen betrieben werden kann. Unter Verzicht des Beachtens von Übergangstellen stellt sich ein erheblicher Zeitgewinn ein, welcher den Nachteil des Materialverlustes mehr als ausgleicht. Vorteilhaft ist auch, dass sich so ein durchgehend gleich bleibender, ursprünglicher Innendurchmesser der Zylinderlaufbuchse herstellen lässt, ohne dass wiederum (Material)Übergänge beachtet werden müssten.

Als Feinbearbeitung kann zum Beispiel ein Honen vorgesehen sein. Weil die Reparaturbeschichtung von dem Übergang bis zum Fußbereich durchgehend ist, sind auch Materialübergänge zu unterschiedlichen Materialien in der "neuen" Zylinderlaufbuchse vermieden, so dass unter verzicht auf ein spezielles Honwerkzeug ein einfaches Feinbearbeitungs- bzw. Honwerkzeug eingesetzt werden kann.

Die mit dem erfindungsgemäßen Reparaturverfahren hergestellte Reparaturbeschichtung auf der Auskleidung bzw. auf der Innenwand der Zylinderlaufbuchse weist bevorzugt dieselben Eigenschaften auf, wie eine Beschichtung welche von vorn herein auf eine Leichtmetallwand gespritzt wurde um so die Zylinderlaufbuchse zu bilden. Insofern kann mit dem erfindungsgemäßen Reparaturverfahren eine ursprünglich aus Grauguss hergestellte Zylinderlaufbuchse unter Beibehaltung der tragenden Graugussauskleidung mit den Vorteilen einer Beschichtung beispielsweise des PTWA-Innenbeschichtungsverfahrens aufwarten.

Natürlich können alle Zylinderlaufbuchsen des Motorblocks mit dem Reparaturverfahren nach der Erfindung bearbeitet werden. Möglich ist auch verschleißfreie Zylinderlaufbuchsen des ohnehin zu bearbeitenden Motorblocks mit dem erfindungsgemäßen Reparaturverfahren zu bearbeiten.

Weitere vorteilhafte Ausgestaltungen der Erfindung sind in den Unteransprüchen, sowie in der folgenden Figurenbeschreibung offenbart. Es zeigen:
- Fig. 1: einen Motorblock aus einem Leichtmetall, in welchem eine Zylinderlaufbuchse gegossen ist, wobei die Zylinderlaufbuchse im oberen Totpunktbereich Verschleiß aufweist, und
- Fig. 2 bis 5: Schritte zur Reparatur der Zylinderlaufbuchse.

In den unterschiedlichen Figuren sind gleiche Teile stets mit denselben Bezugszeichen versehen, so dass diese in der Regel auch nur einmal beschrieben werden.

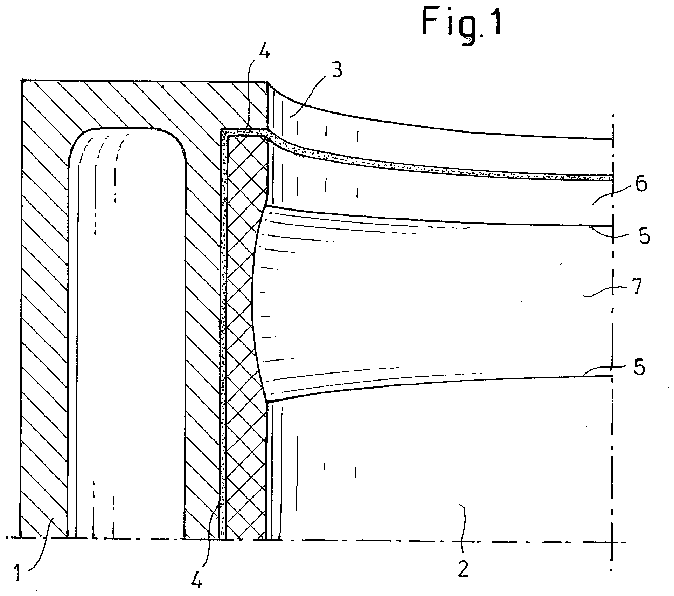

Figur 1 zeigt einen Motorblock 1 aus einem Leichtmetall ausschnittsweise. Als Leichtmetall kann beispielsweise Aluminium verwendet werden. In dem Motorblock 1 sind Zylinderlaufbuchsen 2 aus einem metallischen Material, beispielsweise aus Grauguss eingegossen. Die Zylinderlaufbuchsen 2 können auch als Auskleidung 2 bezeichnet werden. Die Zylinderlaufbuchse 2 bzw. die Auskleidung ist kopfseitig, also in der Zeichnungsebene oben, von einer Leichtmetalllippe 3 übergriffen. Zwischen der Zylinderlaufbuchse 2 bzw. der Auskleidung 2 und dem Leichtmetallkörper ist Öl gefangen, was mittels der kanalartigen Ausgestaltung 4 angedeutet ist. In der Zylinderlaufbuchse 2 ist ein Kolben in herkömmlicher Weise aufgenommen, worauf nicht weiter eingegangen wird.

In Figur 1 ist lediglich ein Ausschnitt des Motorblocks dargestellt, wobei die dargestellte Zylinderlaufbuchse 2 bzw. die Auskleidung 2 mit einem oberen Totpunktbereich 5, einem zu diesem oberhalb angeordneten Kopfbereich 6 und der Leichtmetalllippe 3 erkennbar sind. Unterhalb des oberen Totpunktbereiches 5 erstreckt sich die Zylinderlaufbuchse 2 bzw. die Auskleidung 2 bis zum Fußbereich, welcher nicht mehr erkennbar ist.

Die Zylinderlaufbuchse 2 bzw. die Auskleidung 2 weist beispielhaft im oberen Totpunktbereich 5 Verschleiß 7 auf.

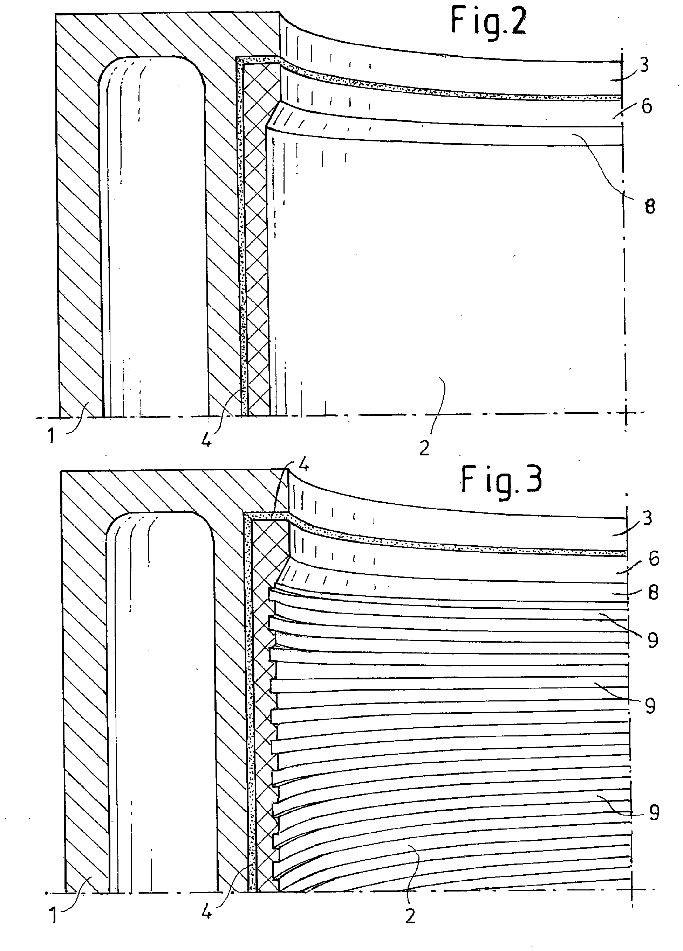

Mit der Erfindung wird ein verbessertes Reparaturverfahren der Zylinderlaufbusche 2 bzw. der Auskleidung 2 vorgeschlagen, welches zumindest die in den Figuren 2 bis 5 dargestellten Schritte aufweist, um den Verschleiß 7 zu entfernen, wobei die Zylinderlaufbuchse 2 bzw. die Auskleidung 2 anschließend eine längere Lebensdauer als zuvor aufweisen kann.

In einem ersten Schritt gemäß Figur 2 wird zunächst die Materialdicke der Zylinderlaufbuchse 2 bzw. der Auskleidung 2 reduziert. Die Auskleidung 2 bzw. die Zylinderlaufbuchse 2 wird innenseitig vollumfänglich und bevorzugt von dem oberen Totpunktbereich 5, auch in den Kopfbereich 6 teilweise eingreifend bis zum Fußbereich in ihrer Materialstärke reduziert bzw. abgetragen. Zielführend ist dabei, dass der oberhalb des oberen Totpunktbereiches 5 angeordnete Kopfbereich 6 in seiner Materialstärke teilweise unverändert bleibt. Insbesondere die Leichtmetalllippe 3 verbleibt in dem in Figur 2 gezeigten Schritt unbearbeitet.

Ein Übergang 8 von dem oberen Totpunktbereich 5 zu dem oberhalb angeordneten, verbliebenen Kopfbereich 6 ist beispielhaft geneigt ausgeführt, bevorzugt stetig geneigt als schiefe Ebene ausgeführt. Der Übergang 8 kann auch mit einer nach außen weisenden Wölbung, quasi als Hohlkehle ausgeführt sein.

Zielführend ist, dass nicht die gesamte Auskleidung entfernt wird, sondern tatsächlich ein tragendes Auskleidungsgerüst verbleibt, welches die noch aufzutragende Reparaturbeschichtung trägt.

In einem sich anschließenden Schritt wird der bearbeitetet Auskleidungsbereich, also von dem oberen Totpunktbereich 5 bis zum Fußbereich aktiviert. Der Übergang 8 wird dabei auch aktiviert werden.

Eine Aktivierung im Sinne der Erfindung ist eine mechanische Bearbeitung um die Oberfläche vorbereitend aufzurauen. Hierzu wird bei dem erfindungsgemäßen Reparaturverfahren bevorzugt das kombinierte Hammer-Bürstverfahren unter Verwendung einer Hammer- oder Schlagbürste eingesetzt. So werden Nuten 9 in der Auskleidung 2 bzw. in der Zylinderlaufbuchse 2 erzeugt. Die Nuten 9 können noch Hinterschneidungen aufweisen.

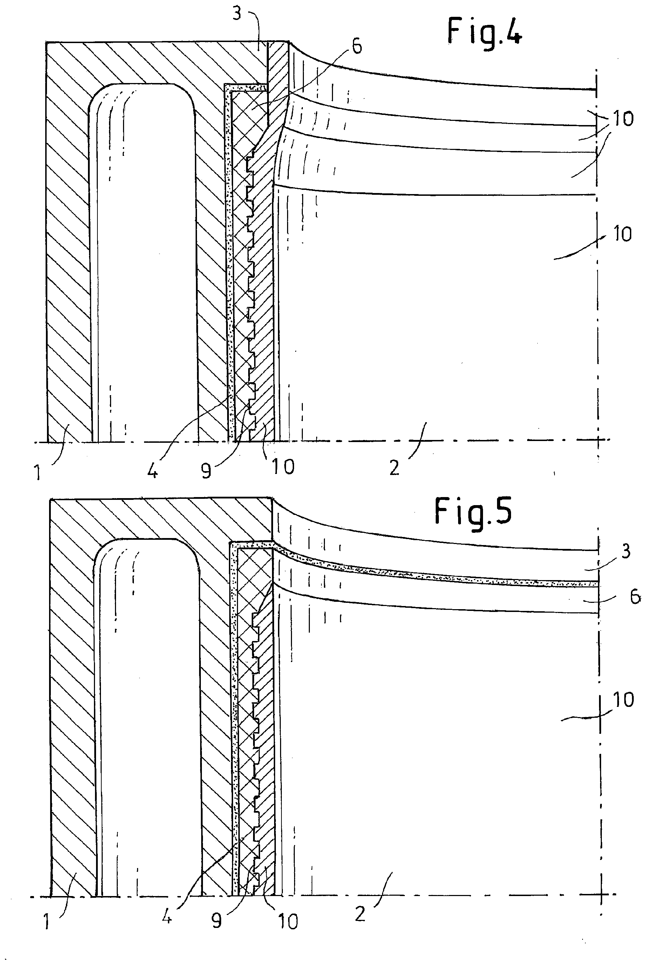

Nachdem die Oberfläche aktiviert ist, wird die Reparaturbeschichtung 10 in einem anschließenden Schritt aufgebracht, wie Figur 4 zeigt. Hierzu kann ein thermisches Spritzverfahren, z.B. ein Plasmaspritzen, beispielhaft das PTWA-Innenbeschichtungsverfahren eingesetzt werden.

Die Reparaturbeschichtung 10 wird mit einem Übermaß aufgespritzt, wobei Übermaß hier bedeutet, dass die Reparaturbeschichtung 10 zunächst mit einer größeren Dicke aufgetragen wird als sie nach der Endbearbeitung wirklich aufweist. Beim Aufspritzen wird auch der Kopfbereich 6, der Kanal 4 und die Leichtmetalllippe 3 beschichtet. Da die Oberfläche hier nicht aktiviert wurde, wird sich hier eine ungenügende Bindung ergeben. Auch das Überspritzen des ölführenden Kanals 4 ist nicht weiter schädlich, da die Reparaturbeschichtung 10 ohnehin, wie zu dem anschließenden Schritt nach Figur 5 gezeigt, abgetragen wird. In dem aktivierten Bereich der Auskleidung 2 bzw. der Zylinderlaufbuchse 2, ist deutlich die Bindung der Reparaturbeschichtung 10 zum aktivierten Bereich erkennbar.

Nachdem die Reparaturbeschichtung 10 mit dem Übermaß aufgebracht ist, wird diese feinbearbeitet, wobei, wie in Figur 5 gezeigt, der ursprüngliche Innendurchmesser der Zylinderlaufbuchse 2 wieder hergestellt wird. Insbesondere wird die Beschichtung anhaftend am Kopfbereich 6, den Kanal 4 überbrückend und an der Leichtmetalllippe 3 anhaftend vollständig entfernt. Insofern war es auch nicht schädlich diese Bereiche zunächst mitzubeschichten, obwohl beispielsweise Öl die Bindung reduziert hätte. Die feinbearbeitete Reparaturbeschichtung 10 schließt so bündig an dem Kopfbereich 6 an.

## Patentansprüche

1. Reparaturverfahren zum Herstellen einer Reparaturbeschichtung (10) durch Plasmaspritzen einer Zylinderbuchse, die eine metallische Auskleidung (2) aufweist
umfassend zumindest die Schritte
Bearbeiten der Zylinderbuchse, so dass die Materialdicke der Auskleidung (2) sowohl in einem beschädigten Bereich als auch unterhalb und oberhalb desselben reduziert wird, wobei ein Kopfbereich (6) oberhalb eines oberen Totpunktbereiches (5) in seiner Materialstärke zumindest teilweise und der ursprüngliche Innendurchmesser einer Leichtmetalllippe (3) im oberen Kopfbereich (6) unverändert bleibt;
Aktivieren des in seiner Materialstärke reduzierten Bereiches der Auskleidung (2);
Beschichten der gesamten Zylinderbuchse mit einem Übermaß, wobei die Reparaturbeschichtung (10) auf den aktivierten Bereich und über den Totpunktbereich (5) hinaus die Leichtmetalllippe (3) beschichtend aufgebracht wird;
Feinbearbeiten der Reparaturbeschichtung (10) bis zum ursprünglichen Innendurchmesser, und vollständiges Abtragen der Reparaturbeschichtung (10) von den zuvor nicht aktivierten Bereichen.

2. Reparaturverfahren nach Anspruch 1,
**dadurch gekennzeichnet, dass**
das Plasmaspritzen ein Innenbeschichten mit dem Plasma Transfer Wire Arc-PTWA-Verfahren ist.

3. Reparaturverfahren nach Anspruch 1 oder 2,
**dadurch gekennzeichnet, dass**
die Auskleidung (2) von einem oberen Totpunktbereich (5) bis zu einem Fußbereich in ihrer Materialstärke reduziert wird, wobei ein Übergang (8) zwischen dem oberen Totpunktbereich (5) und einem Kopfbereich (6) vorgesehen ist.

4. Reparaturverfahren nach Anspruch 3,
**dadurch gekennzeichnet, dass**
der Übergang (8) stetig ausgeführt ist.

## Claims

1. Repair process for producing a repair coating (10) by plasma spraying a cylinder liner, which has a metallic lining (2),
comprising at least the following steps of:
machining the cylinder liner, such that the material thickness of the lining (2) is reduced both in a damaged region and below and above same, wherein the material thickness of a head region (6) above a top dead centre region (5) remains at least partially unchanged and the original internal diameter of a light metal lip (3) in the top head region (6) remains unchanged;
activating the region of reduced material thickness of the lining (2);
coating the entire cylinder liner with an excess, wherein the repair coating (10) is applied to the activated region and beyond the top dead centre region (5) so as to coat the light metal lip (3);
precision machining the repair coating (10) until the original internal diameter is reached, and completely removing the repair coating (10) from the regions which were previously not activated.

2. Repair process according to Claim 1,
**characterized in that**
the plasma spraying process is an internal coating process with the plasma transfer wire arc (PTWA) process.

3. Repair process according to Claim 1 or 2,
**characterized in that**
the material thickness of the lining (2) is reduced from a top dead centre region (5) down to a foot region, wherein a transition (8) is provided between the top dead centre region (5) and a head region (6).

4. Repair process according to Claim 3,
**characterized in that**
the transition (8) is continuous.

## Revendications

1. Procédé de réparation destiné à réaliser un revêtement de réparation (10) par projection au plasma d'une chemise de cylindre qui comporte un revêtement métallique (2),
le procédé comprenant au moins les étapes suivantes
usiner la chemise de cylindre de façon à réduire l'épaisseur de matériau du revêtement (2) à la fois dans une zone endommagée et également au-dessous et au-dessus de celle-ci, une zone de tête (6) située au-dessus d'une zone de point mort haut (5) restant inchangée au moins partiellement en termes d'épaisseur de matériau et le diamètre intérieur d'origine d'une lèvre en métal léger (3) située dans la zone supérieure de la tête (6) restant inchangé ;
activer la zone du revêtement (2) dont l'épaisseur de matériau est réduite ;
revêtir la chemise de cylindre entière avec un excès, le revêtement de réparation (10) étant appliqué sur la zone activée et au-delà de la zone de point mort (5) de manière à revêtir la lèvre en métal léger (3) ;
effectuer un usinage fin du revêtement de réparation (10) jusqu'au diamètre intérieur d'origine, et retirer complètement le revêtement de réparation (10) des zones précédemment non activées.

2. Procédé de réparation selon la revendication 1,
**caractérisé en ce que**
la projection au plasma est un revêtement intérieur à l'aide du procédé ArcPTWA (Plasma Transfer Wire).

3. Procédé de réparation selon la revendication 1 ou 2,
**caractérisé en ce que**
l'épaisseur de matériau du revêtement (2) est réduite depuis l'une zone de point mort haut (5) jusqu'à une zone de pied, une transition (8) étant prévue entre la zone de point mort haut (5) et une zone de tête (6).

4. Procédé de réparation selon la revendication 3,
**caractérisé en ce que**
la transition (8) est réalisée de manière continue.
